# EUROPEAN PATENT APPLICATION

(11) **EP 4 821 672 A1**
(43) Date of publication of application: **14.10.2026**
(21) Application number: 25168880.0
(22) Date of filing: 07.04.2025
(51) Int. Cl.: B32B 3/26, B32B 5/26, B32B 15/14, B32B 15/20, B32B 19/06, F24F 13/02

(54) **AN INSULATION PRODUCT FOR DUCTS AND ITS USE**

(71) Applicant: Paroc Group Oy, 00180 Helsinki (FI)
(72) Inventor: AUBERT, Mélanie, 20660 Littoinen (FI); SAUKKONEN, Toni, 02750 Espoo (FI); RAO, Venkataramanan, 00730 Helsinki (FI); SMOLKA, Miroslav, 91326 Motesice (SK); MAKKONEN, Miko, 00790 Helsinki (FI); GLUSZAK, Malgorzata, 62-200 Gniezno (PL); GLINKOWSKI, Maciej, 62-240 Trzemeszno (PL)
(74) Representative: Berggren Oy

(57) **Abstract**

The present invention relates to an insulation product for ducts, preferably for heating, ventilation or air-conditioning ducts. The insulation product comprises an insulation layer comprising mineral fibres, and having a first large surface and a second large surface, and a facing arranged onto the first large surface of the insulation layer. The facing comprises a reinforcement layer comprising glass fibres, and an aluminium layer adjacent to the reinforcement layer. The reinforcement layer of the facing is arranged adjacent to the insulation layer. The facing is perforated and comprises 3 - 30 perforations/cm².

## Description

The present invention relates to an insulation product for ducts and its use according to the preambles of the enclosed independent claims.

Ventilation ducts are insulated in order to reduce energy losses of cold or hot air in air conditioning systems. The used insulation material conventionally comprises mineral fibres, either glass wool fibres or stone wool fibres. The outer surface of the insulation material usually is made of aluminium foil or facing. The insulation material may be in form of a pipe section or a flexible, blanket-like wraps or boards that can be installed around the duct.

The insulation of the ventilation ducts also improves their fire safety. In case of fire, the temperature in the duct may easily be 700 °C or over. The insulation material around the duct prevents or slows the heat transfer to the surface and to the surroundings. This reduces the risk of ignition of the materials close to the duct. If the insulation material comprises stone wool fibres, the insulation itself is non-combustible and tolerates high temperatures without significant deterioration of the material properties.

However, a duct fire may generate hot gases, even within the insulation material. It is necessary to have a thick layer of insulation material around the duct in order to guarantee that the surface temperature remains on appropriate level long enough and fulfils the requirements of the applicable standards, e.g. EN 1366-1. It would naturally be economically beneficial to be able to reduce the thickness of the insulation material while still meeting the set demands.

An object of this invention is to minimise or possibly even eliminate the disadvantages existing in the prior art.

Another object of the present invention is to provide insulation product for a duct which effectively prevents or slows down the surface temperature increase, and enables the maintenance of the surface temperature within the set limit.

Yet another object of the present invention is to provide insulation product which improves the fire resistance of the duct arrangement.

These objects are attained with the invention having the characteristics presented below in the characterising parts of the independent claims. Some preferred embodiments of the invention are presented in the dependent claims.

The embodiments mentioned in this text relate, where applicable, to all aspects of the invention, even if this is not always separately mentioned.

A typical insulation product according to the present invention for ducts, preferably for heating, ventilation or air-conditioning ducts, comprises
- an insulation layer comprising mineral fibres, having a first large surface and a second large surface, and
- a facing attached to the first large surface of the insulation layer, the facing comprising
   - a reinforcement layer comprising glass fibres,
   - an aluminium layer, adjacent to the reinforcement layer,

wherein the reinforcement layer of the facing is arranged adjacent to the insulation layer, and
wherein the facing is perforated and comprises 3 - 30 perforations/cm².

A typical use according to the present invention of an insulation product according to the invention is for providing a fire insulation for ducts, especially heating, ventilation or air-conditioning ducts.

A typical arrangement for improving fire insulation of a duct comprises
- a duct, preferably a heating, ventilation or an air-conditioning duct, and
- an insulation product according to any of claims, arranged around the duct, wherein the insulation layer of the insulation product is arranged against the duct.

Now it has been surprisingly found that when the facing of an insulation product is perforated and comprises 3 - 30 perforations/cm², the fire insulation properties of the insulation product are unexpectedly improved. This is demonstrated by a low surface temperature of the insulation product. For example, the insulation product can maintain a surface average temperature of <140 °C or a maximum temperature of <180 °C, measured as defined in standard EN1366-1 up to 15, 30, 60, 90 or 120 minutes or even longer. It is assumed, without wishing to be bound by any theory, that the small perforations of the facing allow controlled transmission or escape of gases which are possibly formed in the insulation layer. This prevents abrupt temperature rise in the insulation layer and level off the temperature build-up. At the same time, the volume of gases and/or the amount of heat transmitted to the surroundings through the perforations is/are so small that no significant temperature rise in the vicinity of the outer surface of the insulation product can be observed, and the requirements of the fire insulation regulations are fulfilled. It is highly unexpected, even counterintuitive, that the perforations in the facing could have an improving effect on the fire insulation properties. The present invention enables, for example, a use of a thinner insulation layer while maintaining the fire insulation properties.

According to one preferable embodiment, the facing may comprise 5 - 25 perforations/cm², preferably 7 - 20 perforations/cm², more preferably 9 - 15 perforations/cm². In some embodiments, the facing may comprise 6 - 2 perforations/cm² or 7 - 13 perforations/cm². The perforations go through the whole facing, i.e. through both the reinforcement layer, the aluminium layer, and the optional adhesion layer and/or non-reflecting layer, as described below. In this manner there is a direct contact from the insulation layer to the surface of the insulation product. This direct contact enables that the possible gases formed as a result of an elevated temperature or direct fire in the duct, can be released in a suitable manner. The number of perforations may be selected to suit the thickness of the insulation layer and/or other insulation product parameters.

According to one preferable embodiment the perforations may be evenly distributed over the facing. The perforations may be arranged randomly or in a distinct pattern over the facing, but preferably in an even and uniform manner. The perforations may be arranged, for example, in lines or circular patterns over the surface of the facing. Evenly distributed denotes in the present context that when perforations on two equal, randomly selected areas, e.g. of 0.5 m², of the facing are calculated, the difference between the calculated perforations on those areas, is less than 25%, preferably less than 20%, more preferably less than 15%, even more preferably less than 10% or less than 5%. Even distribution guarantees even transfer of gases over the whole surface of the insulation product and effectively inhibits formation of hot spots or areas, where the insulation effect could fail.

The perforations may have a size of ≤800 µm, preferably ≤500 µm, more preferably ≤300 µm. For example, the perforations may have a size of ≤700 µm, or ≤600 µm, or ≤400 µm, or ≤200 µm. The perforations may have a size ≥25 µm, or ≥50 µm, or ≥80 µm, or ≥100 µm, or ≥150 µm. According to one embodiment, the perforations may have a size in a range of 25 - 800 µm, or 50 - 500 µm, or 80 - 300 µm. The perforations may be circular, oval, angular or irregular in shape. In any case, in the present context, the size of the perforation refers to the maximum distance between two edges of the perforation, measured by a straight line passing the perforation's centre point. The size of the perforations may be selected to provide an optimal transmission of hot gases without causing a temperature increase in the vicinity of the insulation product surface. The perforations with small size do not only ensure the desired transmission for the hot gases, but are also aesthetically pleasing, as they are hard or impossible to observe with a naked eye.

The facing of the insulation product comprises an aluminium layer, arranged adjacent to the reinforcement layer. The aluminium layer is thus in a direct and immediate contact with the reinforcement layer. The aluminium layer may be attached to the reinforcement layer by any means commonly available. For example, the aluminium layer may be attached to the reinforcement layer by using an adhesive. The adhesive may be a polymeric hot melt adhesive, such as polyethylene, and it may be applied as a uniform layer between the aluminium layer and the reinforcement layer. Alternatively, the adhesive may be applied only at specific locations, i.e. on discontinuous areas, such as bands or strips, between the aluminium layer and the reinforcement layer. It is also possible that the aluminium layer may be formed on the reinforcement layer by direct deposition of the aluminium.

The aluminium layer may have a basic weight of 30 - 60 g/m², preferably 40 - 55 g/m², more preferably 45 - 55 g/m². The thickness of the aluminium layer may be in a range of 7 - 30 µm, preferably 10 - 25 µm, more preferably 15 - 20 µm. The aluminium layer is relatively thin, which is economically advantageous, while still providing the desired thermal insulation, moisture barrier and fire resistance properties for the insulation product.

In addition to the aluminium layer, the facing comprises a reinforcement layer, which comprises glass fibres. For example, the reinforcement layer may comprise glass fibres having a titer in a range of 20 - 150 tex, preferably 25 - 140 tex, more preferably 30 - 100 tex. As conventional in the art of glass fibres, "tex" is a unit which indicates the mass in grams of 1000 meters of the fibre. The reinforcement layer may comprise or consists of a non-woven layer, woven layer or a scrim of glass fibres. In a non-woven layer of glass fibres, the glass fibres are randomly oriented and entangled with each other. The glass fibres in the non-woven layer may be bonded by using chemical binder and/or mechanical binding, e.g. needling. In a woven layer of glass fibres, the glass fibres are interlaced by weaving in regular manner to provide a structured fabric. In a scrim, the glass fibres are arranged in a grid-like pattern. The reinforcement layer may have a basic weight of 7 - 25 g/m², preferably 10 - 20 g/m², more preferably 12 - 17 g/m². The reinforcement layer may have a thickness of 50 - 750 µm, preferably 60 - 500 µm, more preferably 75 - 300 µm.

The reinforcement layer may be impregnated with a polymer or an adhesive, e.g. with an adhesive which can be used to attach the aluminium layer to the reinforcement layer.

The reinforcement layer of the facing is arranged adjacent to the insulation layer. This means that the aluminium layer forms the outer surface of the insulation product, which is intended to face away from the duct to be insulated.

According to one embodiment, the facing may further comprise a non-reflecting coating layer arranged on the aluminium layer, wherein the non-reflecting layer then forms a large surface of the insulation product. The non-reflecting coating layer may be a layer of paint or lacquer. Typically the non-reflecting coating layer may be black. The non-reflecting coating layer may have a light reflectance value LRV less than 6.0, preferably less than 5.0, more preferably less than 3.0. According to one embodiment the non-reflecting coating layer may have an infrared emissivity ε >0.7, preferably >0.73, more preferably >0.75, at 150 °C. The infrared emissivity can be measured by using standard ASTM C1371. The infrared emissivity is defined as the effectiveness of a surface of a material in emitting energy as thermal radiation. The infrared emissivity ε of a surface material is measured on a scale where a reflective material that is not emitting any radiant energy is rated at 0, and a nonreflective material that is emitting all of its radiant energy is rated at 1.

The non-reflecting coating layer may have a basic weight of 3 - 12 g/m², preferably 4 - 10 g/m², more preferably 5 - 9 g/m². Preferably the non-reflecting coating layer may be as thin as possible, as long as it provides complete coverage of the aluminium layer, without pinholes or other defects.

The insulation product comprises also an insulation layer having a first large surface and a second large surface. The large surfaces of the insulation layer are parallel with each other, and connected with each other by side surfaces. The insulation layer comprises mineral fibres, for example glass wool fibres or mineral wool fibres. Preferably the insulation layer consists of mineral wool fibres. The mineral fibres of the insulation layer are bonded to a coherent layer with a binder. The binder has been applied to the mineral fibres during manufacture of the insulation layer. The mineral fibres may preferably have a chemical composition of oxides, comprising
39 - 53 weight-%, preferably 40 - 52 weight-%, of SiO₂;
12 - 27 weight-%, preferably 13 - 25 weight-%, of Al₂O₃;
3 - 14 weight-%, preferably 3.5 - 12 weight-%, of Fe₂O₃;
3 - 35 weight-%, preferably 7 - 25 weight-% of CaO;
0 - 15 weight-%, preferably 1 - 12 weight-% of MgO; and
0.5 - 17 weight-%, preferably 1 - 15 weight-% of Na₂O + K₂O.

The sum of oxides is 100 weight-%. The chemical composition further comprise other oxides which are conventionally present in minor amounts, such as TiO₂, P₂O₅, B₂O₃, BaO, ZnO, ZrO₂, MnO, Li₂O, SrO. The total amount of these other oxides is usually less than 20 weight-%, or less than 15 weight-% or less than 10 weight-%.

The insulation layer may be in form of a batt, blanket, sheet or a pipe section. The insulation layer may have a density of 30 - 200 g/m³, preferably 40 - 160 g/m³, even more preferably 50 - 120 g/m³. The insulation layer may have, for example, a density of 40 - 100 g/m³, preferably 40 - 70 g/m³, more preferably 45 - 55 g/m³. The thickness of the insulation layer may be in a range of 30 - 120 mm, preferably 40 - 110 mm, more preferably 50 - 100 mm.

The insulation product may further comprise a polymer layer, arranged between the insulation layer and the reinforcement layer of the facing. The polymer layer may comprise or consists of polymeric adhesive, such as hot melt adhesive, for example polyethylene. The polymer layer may have a basic weight of 10 - 30 g/m², preferably 15 - 25 g/m², more preferably 17 - 23 g/m². The thickness of the polymer layer may be in a range of 10 - 30 µm.

The facing is arranged onto the first large surface of the insulation layer. The facing may be attached to the insulation layer be sewing or the facing may be attached to the insulation layer with the polymer layer, described above and arranged between the insulation layer and the reinforcement layer of the facing. In case the reinforcement layer is impregnated with an adhesive or a polymer, as described above, the impregnated adhesive/polymer can be used to attach the facing with the insulation layer.

The insulation product according to the present invention is especially suitable for heating, ventilation or air-conditioning ducts. The duct can be any heating, ventilation or air conditioning duct commonly employed. The duct may be made of aluminium and it may have a circular or quadrangular cross section. The insulation product is arranged around the duct, wherein the insulation layer is arranged against the duct, preferably in direct contact with the duct. A metal mesh, an adhesive, a tape, or mechanical fasteners may be used to secure the insulation product around the duct.

According one embodiment of the invention the metal mesh may be incorporated in the insulation product, on the side of the aluminium layer or optional non-reflecting layer. The metal mesh may be made of galvanized steel, stainless steel or low-carbon steel. The mesh can be attached to the surface of the insulation product by sewing a metal wire, e.g. steel wire, through the insulation product. The facing is attached at the same time to the insulation layer, which means that there is no need for a polymer layer. According to one preferable embodiment, the insulation product comprises a metal mesh, attached on the surface by sewing with a metal wire through the facing and the insulation layer, wherein the insulation product is free of a separate polymer layer between the insulation layer and the facing.

Some embodiments of the present invention are shown in the following schematical, non-limiting drawings, where
Figure 1 shows an embodiment of the insulation product according to the invention, seen from side, and
Figure 2 shows another view of the insulation product according to an embodiment of the invention.

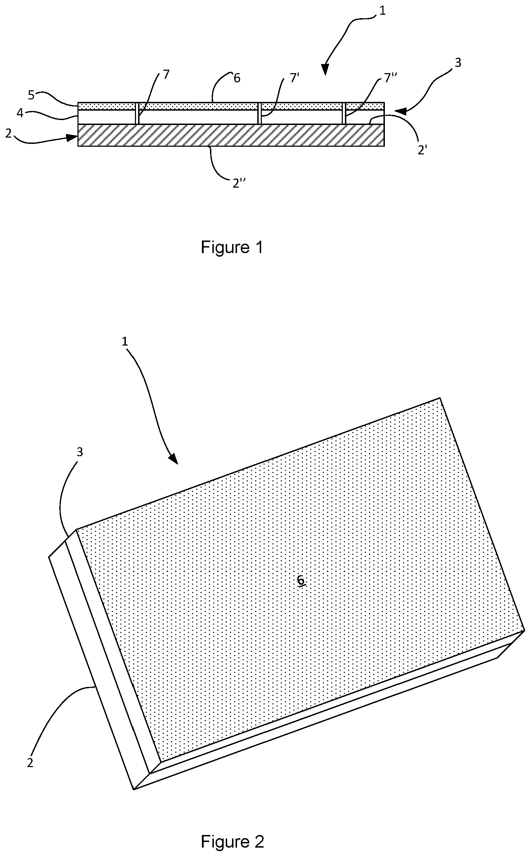

Figure 1 shows an embodiment of the insulation product 1 according to the invention, seen from side. The insulation product 1 comprises an insulation layer 2 and a facing 3. The facing 3 comprises a reinforcement layer 4 and an aluminium layer 5. The insulation layer 2 comprises mineral fibres (not shown), preferably stone wool fibres, and has a first large surface 2' and a second large surface 2". The reinforcement layer 5, which comprises glass fibres (not shown), is arranged on the first large surface 2' of the insulation layer 2. The aluminium layer 5, is arranged on the reinforcement layer 4, adjacent to it. The aluminium layer 5 forms an outer surface 6 of the insulation product 1. The facing 2 is perforated, i.e. the facing 2 comprises perforations 7, 7', 7", which extend from the outer surface 6 of the insulation product 1 to the first surface 2' of the insulation layer 2. In this manner possible gases formed in the insulation layer, originating for example from the binder used in the insulation layer, can escape in a controlled manner from the insulation product 1. In Figure 1 the size of the perforations 7, 7', 7"is exaggerated for illustrative reasons and they are arranged in a random manner. However, the perforations are preferably arranged evenly over the facing, as demonstrated in Figure 2.

Figure 2 shows another view of the insulation product 1 according to an embodiment of the invention. The insulation product 1 comprises an insulation layer 2 and a facing 3. It can be seen that the facing 3 comprises small perforations evenly distributed over the whole outer surface 6 of the insulation product 1. It is understood that the perforations are only schematically presented in Figure 2.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. An insulation product for ducts, preferably for heating, ventilation or air-conditioning ducts, wherein the insulation product comprises
- an insulation layer comprising mineral fibres, having a first large surface and a second large surface, and
- a facing arranged onto the first large surface of the insulation layer, the facing comprising
- a reinforcement layer comprising glass fibres,
- an aluminium layer, adjacent to the reinforcement layer,
wherein the reinforcement layer of the facing is arranged adjacent to the insulation layer,
**characterised in that**
the facing is perforated and comprises 3 - 30 perforations/cm².

2. Insulation product according to claim 1, **characterised in that** the facing comprises 5 - 25, preferably 7 - 20, more preferably 9 - 15, perforations/cm².

3. Insulation product according to claim 1 or 2, **characterised in that** the perforations are evenly distributed over the facing.

4. Insulation product according to claim 1, 2 or 3, **characterised in that** the perforations have a size of ≤800 µm, preferably ≤500 µm, more preferably ≤300 µm.

5. Insulation product according to any of claims 1 - 4, **characterised in that** the facing comprises a non-reflecting coating layer arranged on the aluminium layer, wherein the non-reflecting layer forms a large surface of the insulation product.

6. Insulation product according to claim 5, **characterised in that** the non-reflecting coating layer has an infrared emissivity ε >0.7, preferably >0.73, more preferably >0.75.

7. Insulation product according to claim 5 or 6, **characterised in that** the non-reflecting coating layer has a basic weight of 3 - 12 g/m², preferably 4 - 10 g/m², more preferably 5 - 9 g/m².

8. Insulation product according to any of preceding claims 1 - 7, **characterised in that** the aluminium layer has a basic weight of 30 - 60 g/m², preferably 40 - 55 g/m², more preferably 45 - 55 g/m², and/or a thickness of 7 - 30 µm, preferably 10 - 25 µm, more preferably 15 - 20 µm.

9. Insulation product according to any of preceding claims 1 - 8, **characterised in that** the insulation layer has a density of 30 - 200 g/m³, preferably 40 - 160 g/m³, even more preferably 50 - 120 g/m³.

10. Insulation product according to any of preceding claims 1 - 9, **characterised in that** the insulation layer has a thickness of 30 - 120 mm, preferably 40 - 110 mm, more preferably 50 - 100 mm.

11. Insulation product according to any of preceding claims 1 - 10, **characterised in that** the insulation layer comprises mineral fibres having a chemical composition comprising
39 - 53 weight-%, preferably 40 - 52 weight-%, of SiO₂;
12 - 27 weight-%, preferably 13 - 25 weight-%, of Al₂O₃
3 - 14 weight-%, preferably 3.5 - 12 weight-%, of Fe₂O₃;
3 - 35 weight-%, preferably 7 - 25 weight-% of CaO;
0 - 15 weight-%, preferably 1 - 12 weight-% of MgO; and
0.5 - 17 weight-%, preferably 1 - 15 weight-% of Na₂O + K₂O.

12. Insulation product according to any of preceding claims 1 - 11, **characterised in that** the product comprises a polymer layer between the insulation layer and the reinforcement layer, wherein the polymer layer preferably has a basic weight of 10 - 30 g/m², preferably 15 - 25 g/m², more preferably 17 - 23 g/m².

13. Insulation product according to any of preceding claims 1 - 12, **characterised in that** the reinforcement layer has a basic weight of 7 - 25 g/m², preferably 10 - 20 g/m², more preferably 12 - 17 g/m², and/or a thickness of 50 - 750 µm, preferably 60 - 500 µm, more preferably 75 - 300 µm.

14. Use of an insulation product according to any of claims 1 - 13 for providing fire insulation for ducts, especially heating, ventilation or air-conditioning ducts.

15. An arrangement for improving fire insulation of a duct, the arrangement comprising
- a duct, preferably a heating, ventilation or an air-conditioning duct, and
- an insulation product according to any of claims 1 - 13, arranged around the duct, wherein the insulation layer of the insulation product is arranged against the duct.
